# EUROPÄISCHE PATENTANMELDUNG

(11) **EP 1 048 925 A2**
(43) Veröffentlichungstag der Anmeldung: **02.11.2000**
(21) Anmeldenummer: 00107208.1
(22) Anmeldetag: 01.04.2000
(51) Int. Cl.: G01B 7/14

(54) **Induktiver Sensor für thermische Bearbeitungsmaschinen**

(30) Priorität: 29.04.1999 DE 19919485
(71) Anmelder: Messer Cutting & Welding AG, 64823 Gross-Umstadt (DE)
(72) Erfinder: Albert, Hans-Joachim, 65719 Hofheim-Lorsbach (DE); Faust, Josef, 64711 Erbach (DE)
(74) Vertreter: Berdux, Klaus, Dipl.-Ing.

(57) **Zusammenfassung**

Die Erfindung betrifft einen induktiven Sensor für thermische Bearbeitungsmaschinen, insbesondere für Brennschneidmaschinen, zur induktiven Messung des Arbeitsabstandes eines Plasma-, Autogen- oder Laser-Werkzeugs von einem Werkstück (5).
Erfindungsgemäß wird dadurch, daß der induktive Sensor (1) aus einem durch mindestens eine Koaxialleitung (3) mit einer elektronischen Schaltung (4) geschalteten Sensorring (2) besteht, ein einfaches und kostengünstiges Meßgerät zur induktiven Werkzeug-Werkstück-Abstandsmessung für Brennschneidmaschinen mit Plasma-, Autogen- oder Laser-Werkzeug zur Verfügung gestellt.

## Beschreibung

Die Erfindung betrifft einen induktiven Sensor für thermische Bearbeitungsmaschinen, insbesondere für Brennschneidmaschinen, zur induktiven Messung des Arbeitsabstandes eines thermischen Plasma-, Autogen- oder Laser-Werkzeugs von einem Werkstück.

Die bisher in der Brennschneidtechnik zur induktiven Messung des Arbeitsabstandes eines Werkzeugs von einem Werkstück verwendeten induktiven Sensoren sind aufgrund ihres komplizierten Aufbaus (Vielfachwindungen und/oder ferritischer Kern) relativ kostenaufwendig und wenig betriebssicher.

Aufgabe der Erfindung ist es daher, einen im Aufbau einfachen, kostengünstigen induktiven Sensor zur Messung des Arbeitsabstandes eines Werkzeugs von einem Werkstück für thermische Bearbeitungsmaschinen, insbesondere für Brennschneidmaschinen mit Plasma-, Autogen- oder Laserwerkzeug, zu schaffen.

Die Aufgabe wird erfindungsgemäß dadurch gelöst, daß der induktive Sensor aus einem durch mindestens eine Koaxialleitung mit einer elektronischen Schaltung geschalteten Sensorring besteht.

Erfindungsgemäß besteht der zum Werkstück variabel beabstandet angeordnete und über einen Halter durch die Koaxialleitung mit der elektronischen Schaltung geschaltete induktive Sensorring aus einem nicht magnetischen, metallischen und formstabilen Werkstoff. Der induktive Sensorring ist an einer Stelle derart geschlitzt, daß eine Windung entsteht, von deren Enden aus zwei massive nicht magnetische Metallanschlußdrähte über einen Halter durch eine herkömmliche Koaxialleitung mit der die Sensorring-Meßergebnisse auswertenden elektronischen Schaltung geschaltet sind.

Der Sensorring mit den Metallanschlußdrähten kann auch aus einem stab- oder rohrförmigen Materialstück, wie beispielsweise aus ein handelsübliches Edelstahl-Koaxialrohr mit einem als Innenleiter in einer mineralischen Isolationsfüllung (Quarzsand) angeordneten Metalldraht, bestehen. Das Stab-/Rohr-Schirmgeflecht findet dabei als Außenleiter Verwendung. Der Metalldraht-Innenleiter und der Schirmgeflecht-Außenleiter werden als Hinleiter und als Rückleiter eingesetzt.

Anstelle eines zum Werkstück in seinen Meßabstandd veränderlichen angeordneten und über den Halter durch die Koaxialleitung mit der elektronischen Schaltung geschalteten Sensorrings finden zur Werkzeug-Werkstück-Abstandsmessung auch zwei als Doppel-/Kopplungssensorring angeordnete und über einen Halter durch zwei Koaxialleitungen mit der elektronischen Schaltung verbundene Sensorringe Verwendung, wobei die eine Übertrager-Wicklung der elektronischen Schaltung die zweite Windung des Doppel-/Kopplungssensorrings bildet.

Das Funktionsprinzip der in vorbeschriebener Weise über den Halter und mittels mindestens einer Koaxialleitung mit dem Sensorring geschalteten und die Sensorring-Meßdaten in ein analoges Ausgangsssignal umsetzenden elektronischen Schaltung beruht darauf, daß ein Generator in eine Wicklung eines Übertragers speist, an dessen beiden Sekundärwicklungen zwei induktive Lasten angeschlossen sind, von denen eine induktive Last (Sensorring) veränderlich ist. Durch die Lastverschiebung in der einen Sekundärwicklung ändert sich die Amplitude der induzierten Spannung und dadurch auch das Ausgangssignal der elektronischen Schaltung.

In der praktischen Ausführung der Erfindung ändert sich die variable induktive Last der Sekundärwicklung des Übertragers der elektronischen Schaltung entsprechend der jeweiligen Änderung des Abstands des Sensorrings zum Werkstück.

Die einer ersten bevorzugten Ausführungsform der Erfindung ist der induktive Sensorring mit der Koaxialleitung und einer Wicklung des Übertragers zu einem induktiven Lastkreis und durch einen zu einer Übertrager-Wicklung parallel geschalteten Kondensator zu einem Parallelschwingkreis geschaltet. Die diesem Parallelschwingkreis eigene Resonanz erhöht die Empfindlichkeit der elektronischen Schaltung. Der Abgleich der Arbeitshöhe erfolgt mittels Frequenzabgleich an einem in der elektronischen Schaltung zweckmäßig geschalteten Generator.
Bei dieser, den Übertrager mit drei Wicklungen aufweisenden elektronischen Schaltung speist ein dem Generator nachgeschalteter Verstärker die Erregerwicklung des Übertragers und liefert über einen nachgeschalteten Gleichrichter die Referenzspannung für einen Differenz-Verstärker. Die in der einen Wicklung des Übertragers durch die Lastverschiebung veränderlich induzierte Spannung wird über einen nachgeschalteten Gleichrichter dem anderen Eingang des Differenz-Verstärkers zur Erzeugung des analogen Gleichspannungssignals zugeführt. Im abgeglichenen Zustand ist dieses Analog-Ausgangssignal Null. Je nach Abstandsabweichung von der eingestellten Abtasthöhe des Sensorrings vom Werkstück, stellt sich im Differenz-Verstärker ein positives oder negatives Ausgangsignal, welches in einem nachgeschalteten Regelkreis als Höhensignal verarbeitet werden kann, ein.

Die des weiteren bevorzugte Ausführungsform der Erfindung beruht auf dem gleichen vorbeschriebenen Funktionsprinzip, wobei durch einen in Reihe zu einer Übertrager-Wicklung der elektronischen Schaltung geschalteten Kondensator ein Reihenschwingkreis ausgebildet ist.

Diese bevorzugte Ausführungsform der Erfindung weist insbesondere den Vorteil auf, daß bei Verwendung von unterschiedlichen Längen der Koaxialleitung und unterschiedlichen Durchmessern des Sensorrings damit eine Möglichkeit der optimalen Einstellung der Auflösung einfacher ist.

In einer dritten bevorzugten Ausführungsform der Erfindung weist die auf dem vorbeschriebenen Funktionsprinzip beruhende elektronische Schaltung einen Übertrager mit nur zwei Wicklung auf. Bei dieser Sensorschaltung ist die dritte Übertrager-Wicklung als Wicklung des Doppel-/Kopplungsrings ausgebildet, wobei der Doppel-/Kopplungssensorring über einen Halter durch zwei Koaxialleitungen mit der elektronischen Schaltung verbunden ist, von denen eine über eine induktive Last und über einen Gleichrichter mit dem Differenz-Verstärker geschaltet ist.

Diese vorteilhafte Ausführungsform der Erfindung zeichnet sich durch eine besonders hohe Auflösung aus und ermöglicht dadurch einen größeren Abstand zum Werkstück. Dieses verhindert eine Verschmutzung und Beschädigung des Sensorrings durch den Schneidvorgang und hochstehende Werkstücke.

Der erfindungsgemäße induktive Sensor für thermische Bearbeitungsmaschinen, insbesondere für Brennscheidmaschinen mit Plasma-, Autogen- oder Laser-Werkzeug, stellt aufgrund seines einfachen Aufbaus eine kostengünstige Alternative zu den bisher in der Brennschneidtechnik eingesetzten induktiven Sensoren zur Messung des Arbeitsabstands eines Werkzeugs von einem Werkstück dar.

Die Erfindung wird nun mittels bevorzugter Ausführungsformen in Verbindung mit der Zeichnung näher erläutert.
Es zeigen:
- Fig. 1: ein Blockschaltbild eines zu einem Werkstück beabstandet angeordneten erfindungsgemäßen induktiven Sensors mit einem über eine Koaxialleitung mit einer elektronischen Schaltung zu einem Parallelschwingkreis geschalteten Sensorring,
- Fig. 2: ein Blockschaltbild des zu einem Werkstück beabstandet angeordneten erfindungsgemäßen induktiven Sensors mit dem über die Koaxialleitung mit einer elektronischen Schaltung zu einem Reihenschwingkreis geschalteten Sensorring,
- Fig. 3: ein Blockschaltbild des zu einem Werkstück beabstandet angeordneten erfindungsgemäßen induktiven Sensors mit einem eine Wicklung aufweisenden und über zwei Koaxialleitungen mit einer elektronischen Schaltung mit zwei Übertrager-Wicklungen zu einem Parallelschwingkreis geschalteten Doppel-/Koppelsensorring,
- Fig. 4: eine schematische Darstellung eines Sensorrings des gemäß Fig. 3 mit der elektronischen Schaltung zu einem Parallelschwingkreis geschalteten induktiven Doppel-/Kopplungssensorrings.

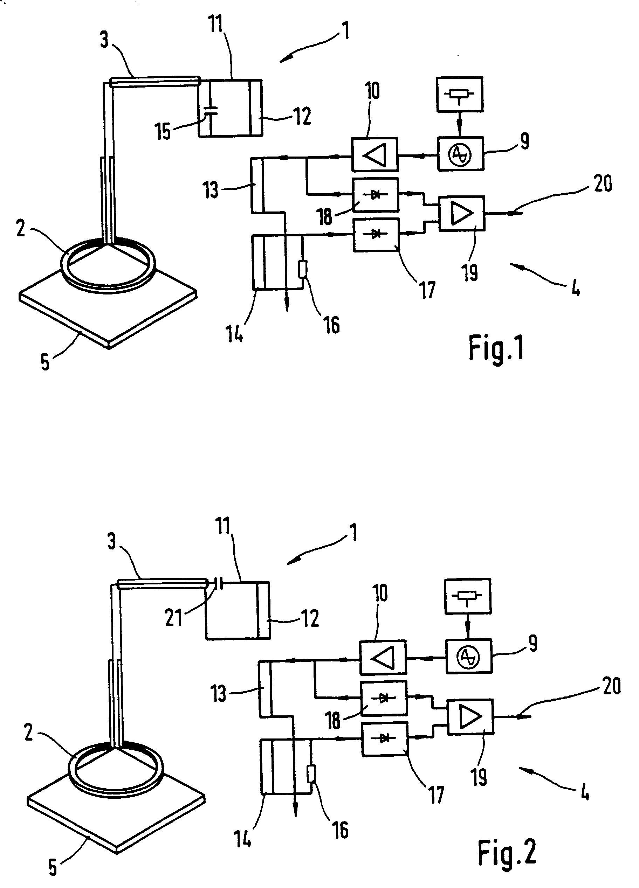

Die Fig. 1 der Zeichnung zeigt ein Blockschaltbild eines erfindungsemäßen induktiven Sensors 1 mit einem zu einem Werkstück 5 beabstandet angeordneten und über einen nicht dargestellten Halter durch eine Koaxialleitung 3 mit einer elektronischen Schaltung 4 geschalteten Sensorring 2.

Der Sensorring 2 ist dabei mit der Koaxialleitung 3 und einer Wicklung 14 eines Übertragers 11 der elektronischen Schaltung 4 zu einem induktiven Lastkreis geschaltet, der durch einen zur Wicklung 14 des Übertragers 11 parallel geschalteten Kondensator 15 zu einem Parallelschwingkreis ausgebildet ist. Durch die dieser Parallelschwingkreis-Schaltung eigenen Resonanz wird die Empfindlichkeit der elektronischen Schaltung 4 erhöht. Der Abgleich der Arbeitshöhe erfolgt mittels Frequenzabgleich an einem in der elektronischen Schaltung 4 zweckmäßig geschalteten Generator 9. Bei der den Übertrager 11 mit drei Wicklungen 12, 13, 14 aufweisenden elektronischen Schaltung 4 speist ein dem Generator 9 nachgeschalteter Verstärker 10 die Erregerwicklung 13 des Übertragers 11 und liefert gleichzeitig über einen nachgeschalteten Gleichrichter 18 eine gleichgerichtete Referenzspannung für einen nachgeschalteten Differenz-Verstärker 19. Die in der mit einer induktiven Last 16 geschalteten Wicklung 14 des Übertragers 11 durch die Lastverschiebung veränderlich induzierte Spannung wird über einen dieser Wicklung 14 mit der Last 16 nachgeschalteten Gleichrichter 17 dem Differenz-Verstärker 19 zur Erzeugung eines analogen Ausgangssignals 20 zugeführt. Im abgeglichenen Zustand beträgt der Wert des analogen Ausgangssignals 20 Null. Der Änderung des Meßabstands des Sensorrings 2 von dem Werkstück 5 entsprechend wird im Differenz-Verstärker 19 das positive oder negative analoge Ausgangssignal 20 erzeugt, welches in einem nicht dargestellten nachgeschalteten Regelkreis als ein durch den Sensorring-Werkstück-Abstand veränderliches Höhensignal verarbeitet werden kann.
Bei dem in Fig. 2 dargestellten und auf das ― wie in Fig. 1 dargestellte und vorab beschriebene Funktionsprinzip beruhenden - erfindungsgemäßen Sensor 1 ist die Sensorelektronik durch einen in Reihe zur Wicklung 14 des Übertragers 11 geschalteten Kondensator 21, als Reihenschwingkreis ausgebildet.

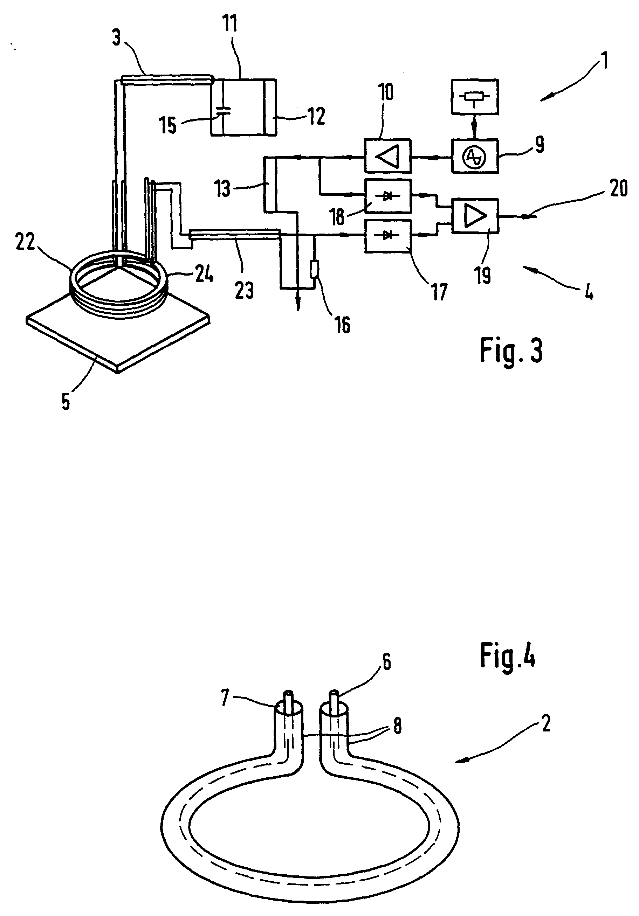

Fig. 3 zeigt einen erfindungsgemäßen induktiven Sensor 1 mit einem zu dem Werkstück 5 beabstandet angeordneten und aus zwei übereinander angeordneten Sensorringen 2 bestehenden Doppel-/Kopplungssensorring 22, der über einen nicht dargestellten Halter durch die Koaxialleitung 3 und eine weitere Koaxilleitung 23 mit der elektronischen Schaltung 4 zu einem Parallelschwingkreis derart geschaltet ist, daß die in den Fig. 1 und 2 dargestellten Ausführungsformen vorhandene Wicklung 14 des Übertragers 11 nunmehr eine Wicklung 24 des Doppel-/Kopplungssensorrings 22 bildet, die über einen nicht dargestellten Halter durch die Koaxialleitung 23 über die induktive Last 16 und über den Gleichrichter 17 mit dem Differenz-Verstärker 19 geschaltet ist.
Mit dieser speziellen Ausführungsform der Erfindung ist eine besonders hohe Auflösung gewährleistet.
In Fig. 4 ist ein Sensorring 2 des in Fig. 3 dargestellten Doppel-/Kopplungssensorrings 22 aufgezeigt, der aus ein an einer Stelle geschlitztes handelsübliches Edelstahl-Koaxialrohr besteht, das einen durch eine mineralische Isolationsfüllung 7 elektrisch isolierten und zwei Anschlußstellen aufweisenden Innenleiter 6 und einen das Schirmgeflecht des Koaxialrohres bildenden Außenleiter 8 aufweist.

### Bezugszeichen-Aufstellung

- 1: Sensor (induktiv)
- 2: Sensorring
- 3: Koaxialleitung
- 4: Elektronische Schaltung
- 5: Werkstück
- 6: Innenleiter
- 7: Isolationsfüllung
- 8: Außenleiter
- 9: Generator
- 10: Verstärker
- 11: Übertrager
- 12: Wicklung
- 13: Erregerwicklung
- 14: Wicklung
- 15: Kondensator (Parallelschaltung)
- 16: Last
- 17: Gleichrichter
- 18: Gleichrichter
- 19: Differenz-Verstärker
- 20: Ausgangssignal
- 21: Kondensator (Reihenschaltung)
- 22: Doppel-/Kopplungssensorring
- 23: Koaxialleitung
- 24: Wicklung (Sensorring)

## Patentansprüche

1. Induktiver Sensor für thermische Bearbeitungsmaschinen, insbesondere für Brennschneidmaschinen, zur induktiven Messung des Arbeitsabstandes eines thermischen Plasma-, Autogen- oder Laser-Werkzeugs von einem Werkstück,
,dadurch gekennzeichnet,
daß der induktive Sensor (1) aus einem durch mindestens eine Koaxialleitung (3) mit einer elektronischen Schaltung (4) geschalteten Sensorring (2) besteht.

2. Induktiver Sensor nach Anspruch 1,
dadurch gekennzeichnet,
daß der mit einem veränderlichen Abstand zu einem Werkstück (5) angeordnete und über einen Halter mittels der Koaxialleitung (3) mit der elektronischen Schaltung (4) geschaltete induktive Sensorring (2) aus einem, nicht magnetischen, metallischen und formstabilen Werkstoff besteht.

3. Induktiver Sensor nach Anspruch 1 oder 2,
dadurch gekennzeichnet,
daß der an einer Stelle geschlitzte Sensorring (2) eine Windung mit an jede der beiden Anschlußstellen befestigten massiven, nicht magnetischen Metalldrähten, aufweist.

4. Induktiver Sensor nach Anspruch 1,
dadurch gekennzeichnet,
daß der induktive Sensorring (2) aus einem ringförmig gebogenen und an einer Stelle geschlitzten, stab- oder rohrförmigen Materialstück, vorzugsweise aus einem Edelstahl-Koaxialrohr, mit einem Innenleiter (6), einer diesen elektrisch isolierenden Isolationsfüllung (7) und einen das Schirmgeflecht bildenden Außenleiter (8), besteht.

5. Induktiver Sensor nach einem der Ansprüche 1 bis 4,
dadurch gekennzeichnet,
daß zwei induktive Sensorringe (2) zu einem Doppel-/Kopplungssensorring (22) mit einer zusätzlichen Wicklung (24) angeordnet sind.

6. Induktiver Sensor nach Anspruch 1,
dadurch gekennzeichnet,
daß der Sensorring (2) mit der Koaxialleitung (3) und einer Wicklung (14) eines Übertragers (11) der elektronischen Schaltung (4) zu einem induktiven Lastkreis geschaltet ist.

7. Induktiver Sensor nach Anspruch 1,
dadurch gekennzeichnet,
daß ein Kondensator (15) mit der Wicklung (14) des Übertragers (11) der elektronischen Schaltung (4) zu einem Parallelschwingkreis geschaltet ist.

8. Induktiver Sensor nach Anspruch 1,
dadurch gekennzeichnet,
daß ein Kondensator (21) mit der Wicklung (14) des Übertragers (11) der elektronischen Schaltung (4) zu einem Reihenschwingkreis geschaltet ist.

9. Induktiver Sensor nach Anspruch 7 oder 8,
dadurch gekennzeichnet,
daß bei der, den Übertrager (11) mit drei Wicklungen (12, 13, 14) aufweisenden elektronischen Schaltung (4) zur Erzeugung eines analogen Ausgangssignals (20), zur Bereitstellung der dazu erforderlichen gleichgerichteten Reverenzspannung, ein frequenzabgleichender Generator (9), ein Verstärker (10), die Erregerwicklung (13) des Übertragers (11), ein Gleichrichter (18) und ein Differenz-Verstärker (19) sowie zur Zuführung der durch Verschiebung einer Last (16) in der Wicklung (14) des Übertragers (11) induzierten Spannung zum Differenz-Verstärker (19), die Wicklung (14) des Übertragers (11) mit der Last (16) über einen Gleichrichter (17) mit dem Differenz-Verstärker (19) geschaltet sind.

10. Induktiver Sensor nach Anspruch 1,
dadurch gekennzeichnet,
daß die Wicklung (14) des Übertragers (11) der elektronischen, durch zwei Koaxialleitungen (3, 23) mit dem Doppel-/Kopplungssensorring (22) geschalteten Schaltung (4) als Wicklung (24) des Doppel-/Kopplungssensorrings (22) ausgebildet ist.
